(19) Europäisches Patentamt / European Patent Office / Office européen des brevets

(11) **EP 3 794 262 B1**

(12) **EUROPEAN PATENT SPECIFICATION**

(45) Date of publication and mention of the grant of the patent:
**07.05.2025 Bulletin 2025/19**

(21) Application number: **19724202.7**

(22) Date of filing: **17.05.2019**

(51) International Patent Classification (IPC):
*F16L 9/12* (2006.01)     *C08J 3/24* (2006.01)
*C08J 5/18* (2006.01)     *C08K 5/17* (2006.01)

(52) Cooperative Patent Classification (CPC):
(C-Sets available)
**C08J 5/18;** C08J 3/24; C08K 5/17; C08K 2201/019;
C08L 2203/16; C08L 2203/18; F16L 9/12     (Cont.)

(86) International application number:
**PCT/EP2019/062784**

(87) International publication number:
**WO 2019/219902 (21.11.2019 Gazette 2019/47)**

(54) **IMPROVING RHEOLOGICAL PROPERTIES OF THERMOPLASTIC POLYOLEFIN COMPOSITIONS**

VERBESSERUNG DER RHEOLOGISCHEN EIGENSCHAFTEN VON THERMOPLASTISCHEN POLYOLEFINZUSAMMENSETZUNGEN

AMÉLIORATION DES PROPRIÉTÉS RHÉOLOGIQUES DE COMPOSITIONS DE POLYOLÉFINE THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2018 EP 18173235**

(43) Date of publication of application:
**24.03.2021 Bulletin 2021/12**

(73) Proprietors:
• **ABU DHABI POLYMERS CO. LTD (BOROUGE) - Sole Proprietorship L.L.C.**
**Abu Dhabi (AE)**
• **Borealis AG**
**1020 Vienna (AT)**

(72) Inventors:
• **KUMAR, Ashish**
**Abu Dhabi (AE)**
• **FAWAZ, Joel**
**Abu Dhabi (AE)**
• **GADGOLI, Umesh Balkrishna**
**Abu Dhabi (AE)**
• **KALIAPPAN, Senthil Kumar**
**Abu Dhabi (AE)**

(74) Representative: **Maiwald GmbH**
**Elisenhof**
**Elisenstraße 3**
**80335 München (DE)**

(56) References cited:
**EP-A1- 0 426 853     WO-A1-2016/170016**
**WO-A1-99/62996     CN-A- 103 467 812**

(52) Cooperative Patent Classification (CPC): (Cont.)

C-Sets
C08K 5/17, C08L 23/0815

## Description

### Field of the invention

The present invention relates to a process for improving the rheological properties of a thermoplastic polyolefin composition by reacting a polyolefin resin with a rheology modifier, which is free of peroxide initiator, a reactive polyolefin composition comprising a polyolefin resin and said rheology modifier, which is a precursor of a thermoplastic polyolefin composition, the thermoplastic polyolefin composition obtainable by said process and articles comprising said thermoplastic polyolefin composition.

### Background art

Polyolefin compositions are used for a variety of different applications such as e.g. pipes, injection moulding applications, films and blow moulding applications. Especially for these applications enhanced melt strength is of significant importance.

Melt strength is directly connected to the rheological properties of a polyolefin composition. Thereby, certain limits to rheological properties such as melt flow rate or viscosity are imposed by the polymerization catalyst used for polymerizing a polyolefin resin as polymerization catalysts, especially Ziegler-Natta catalysts usually only allow the polymerization of polyolefin resins with certain limits to their molecular weight. Additionally, sequential multi-stage polymerization processes in which two or more polymerization reactors are connected in series to allow the polymerization of multimodal polyolefin resins impose limits to the melt strength of the polyolefin compositions. For increasing the molecular weight of a polyolefin resin in a multistage process the split of the polymerization stage in which the high molecular weight polyolefin component, usually a gas phase reactor stage, has to be increased. However, increase of the gas phase reactor split to increase the molecular weight and the melt strength of a polyolefin composition has a detrimental effects on other properties of the polyolefin composition such as mechanical strength, or impact resistance.

EP 3 109 275 A1 discloses a polyethylene composition suitable for pipe applications, especially large diameter pipes, with high melt strength which results in improved sagging and extrusion properties. This application shows the limits of conventional polyolefin polymerization in multistage processes with Ziegler-Natta catalysts in which the lower limit of melt flow rate $MFR_5$ for bimodal polyethylene compositions are in the range of 0.14 g/10 min to 0.30 g/10 min together with an upper limit of the viscosity at a shear stress of 747 Pa, $eta_{747}$, of 1300 kPa·s.

For further improving the rheological properties of polyolefin compositions several post-polymerization procedures are known in the art such as modification of the polyolefin backbone utilizing free radical chemistry such as high energy radiation or peroxide crosslinking. However, free radical chemistry has the disadvantage of uncontrollable side reactions due to chain scission which results in a number of oxygen-containing by-products.

To overcome the above problems it has been found in the present invention that by reacting a polyolefin resin with a functional agent, which is free of peroxide the rheological properties of the resulting polyolefin composition can be significantly improved. Said functional agent thus acts as rheology modifier.

It is further appreciated that the use of the functional agent in the method of the present invention allows for the modification of the polyolefin resin in the compounding step, meaning that no further processing steps, for example Infrared heat curing, need be added either post extrusion or post production in the production of modified articles, saving both time and money.

As a consideration for such a process, it must be noted that the rheology of the polyolefin resin must not be modified too drastically, as to do so could generate polyolefins with undesirable processing properties, which would risk blockages in the compounding equipment used to react the polyolefin resin and rheology modifier as well as risking damage to said compounding equipment.

### Summary of the invention

The present invention thus relates to a reactive polyolefin composition comprising

(A) a polyolefin resin;
(B) a rheology modifier, which is free of peroxide initiator,

wherein the polyolefin resin (A) and the rheology modifier (B) are reactive to form a thermoplastic polyolefin composition at a temperature in the range of from 180°C to 300°C and a specific energy equal to or greater than 0.15 kWh/kg,
wherein the rheology modifier (B) is present in the reactive polyolefin composition in an amount in the range of > 150 to 750 ppm, based on the total amount of the reactive polyolefin composition.

Further, the present invention relates to a process for preparing a thermoplastic polyolefin composition comprising

a) providing a reactive polyolefin composition as described above or below;

b) heating the reactive polyolefin composition to a temperature of 180°C to 300°C; and

c) subjecting the reactive polyolefin composition to a specific energy of equal to or more than 0.15 kWh/kg to obtain the thermoplastic polyolefin composition

wherein process steps (b) and (c) are carried out simultaneously in an extruder and the extruder is operated at a mixer speed in the range of from 200 to 750 rpm.

Additionally, the present invention relates to a thermoplastic polyolefin composition obtainable by the process as described above or below.

Still further, the present invention relates to an article which comprises the thermoplastic polyolefin composition as described above or below or obtainable by the process as described above or below.

Finally, the present invention also relates to the use of a rheology modifier (B), which is free of peroxide initiator, in a reactive polyolefin composition comprising a polyolefin resin (A) and the rheology modifier (B), which is free of peroxide initiator, as described above or below, for increasing the viscosity at a constant shear stress of 747 Pa of the final thermoplastic polyolefin composition, $eta_{747}$ (Comp), and reducing the melt flow rate of the final thermoplastic polyolefin composition, $MFR_5$ (Comp) by reacting the polyolefin resin (A) and the rheology modifier (B) at a temperature in the range of from 180°C to 300°C and a specific energy equal to or greater than 0.15 kWh/kg in a compounder.

It has surprisingly been found that by reacting a polyolefin composition with a rheology modifier, which is free of peroxide initiator, using specific processing conditions as outlined above or below, the rheological properties of the resulting thermoplastic polyolefin composition can be improved as such, that e.g. the viscosity at a constant shear stress of 747 Pa, $eta_{747}$, can be significantly increased, the melt flow rate $MFR_5$ can be significantly reduced, several different shear thinning indices and the flow rate ratio, which are rheological measurements of the molecular weight distribution, can be significantly broadened, and the melt strength and die swell, which are measures for the molecular weight, can be significantly increased whereas at the same time thermal and mechanical properties, such as melting and crystallization temperature, tensile properties, impact properties and pipe pressure tests, are not influenced.

As a consequence the present invention surprisingly provides a thermoplastic polyolefin composition with an improved rheological properties while maintaining thermal properties and mechanical properties.

It has also been found that said reaction between a polyolefin composition and a rheology modifier can be carried out without the need for any extra processing steps, by adapting the compounding step such that the reaction occurs therein as a result of the heat and shear force. This enables the production of modified articles without any extra processing steps, for example infrared heating curing.

**Definitions**

A polyolefin resin denotes resin comprising a polymer which is composed of monomer units of the general formula $C_nH_{2n}$, such as polyethylene resins or polypropylene resins. The polyolefin resin can be present in powder form, such as coming directly from the polymerization reactor, or in pelletized form, such as after a compounding step.

A polyethylene resin according to the present invention denotes a polymer derived from at least 50 mol% ethylene monomer units and additional comonomer units.

An ethylene homopolymer thereby denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

An ethylene copolymer denotes a polymer consisting of ethylene monomer units and comonomer units in an amount of at least 0.1 mol%. In an ethylene random copolymer the comonomer units are randomly distributed in the polymer chain.

A polypropylene resin according to the present invention denotes a polymer derived from at least 50 mol% propylene monomer units and additional comonomer units.

A propylene homopolymer thereby denotes a polymer consisting essentially of propylene monomer units. Due to the requirements of large-scale polymerization it may be possible that the propylene homopolymer includes minor amounts of comonomer units, which usually is below 0.1 mol%, preferably below 0.05 mol%, most preferably below 0.01 mol% of the propylene homopolymer.

A propylene copolymer denotes a polymer consisting of propylene monomer units and comonomer units in an amount of at least 0.1 mol%. In a propylene random copolymer the comonomer units are randomly distributed in the polymer chain.

A polyolefin composition, such as a polyethylene composition or polypropylene composition, denotes a blend of the polyolefin resin (A) together with the rheology modifier (B) and optionally additional additives. Usually, the blend is produced by compounding or melt mixing. The term 'different' denotes that a polymeric component differs from another polymeric component in at least one measurable property. Suitable properties for differentiating polymeric components are weight average molecular weight, melt flow rate $MFR_2$ or $MFR_5$, density or comonomer content.

Specific energy is the energy introduced into the polyolefin composition, usually by means of kinetic energy generated through shear force.

Shearing forces in general are unaligned forces pushing one part of a body in one specific direction, and another part of the body in the opposite direction. In the context of the present invention shearing forces are usually induced on the polyolefin composition by the screw or screws in the compounder such as the extruder.

**Figure**

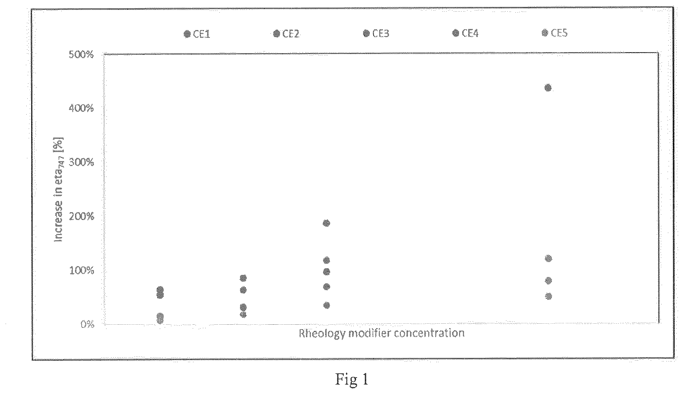

Figure 1 shows the increase of the viscosity at a constant shear stress of 747 Pa, $eta_{747}$, as a function of the amount of rheology modifier for the polyethylene resins PE1 to PE5 of the example section.

**General description**

Reactive Polyolefin Composition

The reactive polyolefin composition comprises the polyolefin resin (A) and the rheology modifier (B), which is free of peroxide.

The reaction conditions under which the polyolefin resin (A) and the rheology modifier (B) are reactive to form the thermoplastic polyolefin composition are a temperature in the range of from 180°C to 300°C and a specific energy equal to or greater than 0.15 kWh/kg.

It is preferred that the above reaction conditions, under which the polyolefin resin (A) and the rheology modifier (B) are reactive to form the thermoplastic polyolefin composition, are in a compounder, suitably an extruder. Said reaction conditions are therefore not applied through an additional processing step, for example an infrared heating curing step.

Preferably the temperature for reacting the polyolefin resin (A) and the rheology modifier (B) is in the range of from 180°C to 300°C, more preferably in the range of from 220°C to 285°C and most preferably in the range of from 240°C to 280°C.

For adjusting the temperature thereby also the nature of the polyolefin resin (A) can be considered. For polyolefin resins (A) with a lower melting temperature $T_m$ the processing temperature can be selected at the lower end of the above range whereas for polyolefin resins (A) with a higher melting temperature $T_m$ the processing temperature can be selected at the upper end of the above range.

Preferably the specific energy for reacting the polyolefin resin (A) and the rheology modifier (B) is in the range of from 0.15 kWh/kg to 0.50 kWh/kg, more preferably in the range of from 0.15 kWh/kg to 0.40 kWh/kg and most preferably in the range of from 0.20 kWh/kg to 0.30 kWh/kg.

The specific energy is preferably introduced into the reactive polyolefin composition as kinetic energy, such as by means of shearing forces.

Thereby, the shearing forces to be applied to obtain a certain specific energy can depend on the density and viscosity of the polyolefin resin (A). The lower the enthalpy and thus, the density and the lower the viscosity, the lower is the amount of shearing forces, which need to be applied to obtain a certain specific energy.

It has been found in the present invention that a minimum specific energy of 0.15 kWh/kg has to be applied in order to initiate the reactivity of the rheology modifier (B).

A specific energy higher than 0.50 kWh/kg can result in chain scissions of the polymer chains of the polyolefin resin (A).

The temperature and specific energy for reacting the reactive polyolefin composition are usually applied during the compounding step of the reactive polyolefin composition. The compounding step usually is conducted in a compounder such as a melt mixer or an extruder.

The temperature is preferably applied by extruding the reactive polyolefin composition at an extruding temperature in the above described range.

The specific energy is preferably applied by extruding the reactive polyolefin composition at a certain screw speed of the one or two screws of the extruder.

Polyolefin Resin (A)

The polyolefin resin (A) can be any polyolefin resin suitable for applications such as pipe applications, injection moulding applications, film applications, blow moulding and other extrusion applications. The polyolefin resin (A) can be a polyethylene resin, polypropylene resin, polybutylene resin or blended mixtures thereof. Suitably the polyolefin resin (A) is a polyethylene resin or a polypropylene resin or a blended mixture thereof such as a mechanical blend of a polyethylene resin and a polypropylene resin.

The polyolefin resin (A) can be unimodal, bimodal or multimodal.

Multimodal resins are frequently used e.g. for the production of pipes due to their favorable physical and chemical properties as e.g. mechanical strength, corrosion resistance and long-term stability. Such compositions are described e.g. in EP 0 739 937 and WO 02/102891. The term molecular weight used herein generally denotes the weight average molecular weight Mw.

Usually a polyolefin resin used for pipe or injection moulding applications comprises at least two polyolefin fractions, which have been produced under different polymerization conditions resulting in different weight average molecular weights for the fractions, is referred to as "multimodal". The prefix "multi" relates to the number of different polymer fractions the composition is consisting of. Thus, for example, a polyolefin resin consisting of two fractions only is called "bimodal".

The form of the molecular weight distribution curve, i.e. the appearance of the graph of the polymer weight fraction as function of its molecular weight, of such a multimodal polyolefin will show two or more maxima or at least be distinctly broadened in comparison with the curves for the individual fractions.

For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

Polyolefin resins which include polyolefin fractions, which differ not in their molecular weight but in their comonomer content, are also called "multimodal". A polyolefin resin with two fractions differing in their comonomer content thus are also called "bimodal".

A unimodal polyolefin resin only includes one polyolefin fraction which cannot be differentiated in molecular weight or comonomer content. Usually unimodal polyolefin resins are polymerized in a single polymerization stage.

The properties of the polyolefin resin (A) such as density, melt flow rate $MFR_5$ or viscosity are not specifically limited.

It can be seen from the example section below as polyolefin resin (A) e.g. polyethylene resins with a broad variety of densities, melt flow rates and viscosities can be suitably used.

In one embodiment the polyolefin resin (A) is a polyethylene resin, preferably a copolymer of ethylene and one or more alpha-olefin comonomers, preferably of one or more $C_4$ to $C_{10}$ alpha olefin comonomers.

Preferably, the comonomer is selected from the group of 1-butene, 1-hexene, 4-methyl-1-pentene, 1-octene and 1-decene. Most preferably, the comonomer is 1-butene and/or 1-hexene.

Moreover, the polyethylene resin is preferably a multimodal polyethylene resin, more preferably a bimodal polyethylene resin.

It is preferred that the polyethylene resin consists of two polyethylene fractions, the fraction having a lower weight average molecular weight is denoted low molecular weight fraction, the other is denoted high molecular weight fraction. Both fractions could be homo-and/or copolymer fractions.

It is preferred that the polyethylene resin is an "in-situ"-blend. Such blends are preferably produced in a multistage process. However, an "in-situ" -blend may also be produced in one reaction stage by using two or more different kind of catalyst.

The polymerization catalysts for the production of the polyethylene resin include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a $MgCl_2$-based ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235 and WO 99/51646.

The process for polymerising ethylene or copolymerising ethylene with the comonomers previously described is known in the state of the art. Such a polymerisation process generally comprises at least one polymerisation stage however the polymerisation process may also comprise additional polymerisation stages. The polymerisation at each stage is generally carried out in solution, slurry, bulk or gas phase. In one particular embodiment the process contains at least one bulk reactor stage and at least one gas phase reactor stage, each stage comprising at least one reactor and all reactors being arranged in cascade. In one particularly preferred embodiment the polymerisation process comprises at least one bulk reactor and at least one gas phase reactor arranged in that order. In some preferred processes the process comprises one bulk reactor and at least two gas phase reactors, e.g. two or three gas phase reactors. The process may further comprise pre- and post reactors. Pre-reactors comprise typically prepolymerisation reactors. In this kind of processes high polymerisation temperatures are generally used in order to achieve specific properties of the polymers. Typical temperatures in all processes are 70 °C or higher, preferably 80 °C or higher, more preferably 85 °C or higher. The high polymerisation temperatures as mentioned above are generally applied either in some or all reactors of the reactor cascade.

Preferably, the polyethylene resin has a density of 920 kg/m$^3$ or more, more preferably of 930 kg/m$^3$ or more, still more preferably of 940 kg/m$^3$ or more, still more preferably of 950 kg/m$^3$ or more. The density may also be between 920 to 960 kg/m$^3$.

The polyethylene resin can be selected from linear low density polyethylene (LLDPE) resins, medium density polyethylene (MDPE) resins and high density polyethylene (HDPE) resins.

The melt flow rate $MFR_5$ of the polyethylene resin preferably is in the range of from 0.05 g/10 min to 50 g/10 min, more preferably 0.10 g/10 min to 20 g/10 min.

The melt flow rate thereby depends in the application of the thermoplastic polyethylene composition.

Further preferred, the polyethylene resin has a $MFR_{21}$ of 1 to 100 g/10 min, more preferably of 2 to 50 g/10 min, and most preferably of 5 to 30 g/10 min.

The flow rate ratio $FRR_{21/5}$ (the ratio between $MFR_{21}$ and $MFR_5$) of the polyethylene resin which is indicative for the broadness of the molecular weight distribution of a polymer is preferably from 5 to 60, more preferably from 15 to 55, even more preferably from 20 to 50.

In another embodiment the polyolefin resin (A) is a polypropylene resin.

The polypropylene resin can be a random copolymer of propylene and one or more comonomers, preferably of one or more of ethylene and/or $C_4$ to $C_{10}$ alpha olefin comonomers.

Preferably, the comonomer is selected from the group of ethylene, 1-butene, 1-hexene, 4-methyl-1-pentene, 1-octene and 1-decene. More preferably, the comonomer is ethylene, 1-butene and/or 1-hexene. Most preferably the comonomer is ethylene.

Moreover, the polypropylene resin is preferably a multimodal propylene random copolymer resin, more preferably a bimodal propylene random copolymer resin.

The polypropylene resin can be a heterophasic propylene copolymer which comprises a propylene homo- or random copolymer as matrix phase and an elastomeric copolymer such as a propylene based elastomeric copolymer or an ethylene-based elastomeric copolymer dispersed therein.

The propylene random copolymer suitable as matrix phase can be a random copolymer of propylene and one or more comonomers, preferably of one or more of ethylene and/or $C_4$ to $C_{10}$ alpha olefin comonomers.

Preferably, the comonomer is selected from the group of ethylene, 1-butene, 1-hexene, 4-methyl-1-pentene, 1-octene and 1-decene. More preferably, the comonomer is ethylene, 1-butene and/or 1-hexene. Most preferably the comonomer is ethylene.

Generally a polymerisation catalyst will be present in the polymerisation process of the polypropylene resin. The polymerisation catalyst typically comprises a transition metal compound and an activator. A suitable polymerisation catalyst known in the art is generally a Ziegler-Natta catalyst.

A Ziegler-Natta type catalyst typically used for propylene polymerisation and/or copolymerisation will be a stereospecific, solid, high yield Ziegler-Natta catalyst component comprising as main components Mg, Ti and Cl. In addition to the solid catalyst component, a cocatalyst(s) as well as external donor(s) will generally be used in the polymerisation process.

The components of the catalyst may be supported on a particulate support, such as inorganic oxide, like silica or alumina, or, usually, a magnesium halide may form the solid support. It is also possible that the catalyst components are not supported on an external support, but the catalyst is prepared by an emulsion-solidification method or by a precipitation method, as is well-known by the man skilled in the art of catalyst preparation.

The solid catalyst usually also comprises at least one electron donor (internal electron donor) and optionally aluminium.

Suitable external electron donors used in the polymerisation are well known in the art and include ethers, ketones, amines, alcohols, phenols, phosphines and silanes.

Examples of suitable Ziegler-Natta catalysts and components in the catalysts are described among others in WO87/07620, WO92/21705, WO93/11165, WO93/11166, WO93/19100, WO97/36939, WO98/12234, WO99/33842, WO03/000756, WO03/000757, WO03/000754, WO03/000755, WO2004/029112, EP2610271, WO2012/007430, WO92/19659, WO92/19653, WO92/19658, US4382019, US4435550, US4465782, US4473660, US4560671, US5539067, US5618771, EP45975, EP45976, EP45977, WO95/32994, US4107414, US4186107, US4226963, US4347160, US4472524, US4522930, US4530912, US4532313, US4657882, US4581342, US4657882.

The process for polymerising propylene or copolymerising propylene with the comonomers previously described is known in the state of the art. Such a polymerisation process generally comprises at least one polymerisation stage however the polymerisation process may also comprise additional polymerisation stages. The polymerisation at each stage is generally carried out in solution, slurry, bulk or gas phase. In one particular embodiment the process contains at least one bulk reactor stage and at least one gas phase reactor stage, each stage comprising at least one reactor and all reactors being arranged in cascade. In one particularly preferred embodiment the polymerisation process comprises at least one bulk reactor and at least one gas phase reactor arranged in that order. In some preferred processes the process comprises one bulk reactor and at least two gas phase reactors, e.g. two or three gas phase reactors. The process may further comprise pre- and post reactors. Pre-reactors comprise typically prepolymerisation reactors. In this kind of processes high polymerisation temperatures are generally used in order to achieve specific properties of the polymers.

Typical temperatures in all processes are 70 °C or higher, preferably 80 °C or higher, more preferably 85 °C or higher. The high polymerisation temperatures as mentioned above are generally applied either in some or all reactors of the reactor cascade.

Rheology modifier

The rheology modifier (B) of the reactive polyolefin composition is free of a peroxide initator. This means that the reaction of the polyolefin resin (A) and the rheology modifier (B) to obtain the thermoplastic polyolefin composition is not based on a peroxide radical initiator.

The rheology modifier (B) is preferably a heterocyclic compound, more preferably a cyclic imide derivative. Still more preferably, the rheology modifier is selected from maleimide derivatives, most preferably is hexamethylene-1,6-dimaleimide.

The rheology modifier (B) is present in the reactive polyolefin composition in an amount in the range of >150 to 750 ppm, further preferred >150 to <750 ppm, most preferred 200 to 700 ppm, based on the total amount of the reactive polyolefin composition.

The rheology modifier (B) can be added to the reactive polyolefin composition as such (neat) in the amounts as described above or in form of so-called master batch (MB), in which the rheology modifier (B) are contained in concentrated form in a carrier polymer.

The optional carrier polymer of the rheology modifier (B) masterbatch is not calculated to the amount of the polyolefin components present in the polyolefin composition. In other words, it is to be understood that the rheology modifier (B) may be added to the polymer composition in form of a masterbatch, i.e. together with a carrier polymer. In such case the carrier polymer is not considered as polymer component(s), but is calculated into the amount (wt%) of the rheology modifier (B).

For the case that the rheology modifier (B) is added in the form of a masterbatch the masterbatch including the rheology modifier (B) and the carrier polymer is present in the reactive polyolefin composition in an amount of 0.05 to 5.0 wt%, based on the total amount of the the reactive polyolefin composition, wherein the amount of masterbatch is selected as such that the amount of only the rheology modifier (B) is as described above.

Further additives

In addition to the polyolefin resin (A) and the rheology modifier (B), the reactive polyolefin composition may comprise and preferably comprises usual additives (C) for utilization with polyolefins, such as stabilizers (e.g. antioxidant agents), metal scavengers and/or UV-stabilizers, antistatic agents and utilization agents (such as processing aid agents). Preferably, the amount of these additives (C) is 10 wt% or below, more preferably 8 wt% or below, more preferably 5 wt% or below, of the reactive polyolefin composition.

Further preferred, the amount of additives (C) different from carbon black is 0 wt% to 1 wt%, more preferably 0.001 wt% to 0.8 wt%.

The reactive polyolefin composition can further comprise carbon black (B) in an amount of 1.0 to 10 wt%, preferably 1.5 to 9.0 wt%, more preferably 1.8 to 8.0 wt%, still more preferably 1.8 to 7.0 wt%, still more preferably 1.8 to 5.0 wt%, still more preferably 1.8 to 4.5 wt% and most preferably 1.8 to 4.0 wt%, based on the total amount of the reactive polyolefin composition.

Carbon black (D) can be added to reactive polyolefin composition as such (neat) or in form of so-called master batch (CBMB), in which carbon black, and optionally further additives (C) as defined above, are contained in concentrated form in a carrier polymer.

The optional carrier polymer of carbon black masterbatch is not calculated to the amount of the polymer components present in the reactive polyolefin composition. In other words, it is to be understood that carbon black (D) and optional additive(s) (C) may be added to the reactive polyolefin composition in form of a masterbatch, i.e. together with a carrier polymer. In such case the carrier polymer is not considered as polymer component(s), but is calculated into the amount (wt%) of carbon black (D) or, respectively, into the amount (wt%) of additive(s) (C).

The amount of the optional carrier polymer of the carbon black master batch is 0 to 5 wt% based on the total amount of the reactive polyolefin composition.

The reactive polyolefin composition is suitably produced by blending the polyolefin resin (A) the rheology modifier (B) and optionally further additives (C) and/or carbon black as described above or below.

The blending can be conducted by mixing the components e.g. by dry-blending introducing the blended composition into a compounder such as a melt mixer or an extruder.

The blending can also be conducted within the compounder such as a melt mixer or extruder by feeding the components into the compounder, e.g. in different feeding ports of an extruder.

Process

The present invention also relates to a process for preparing a thermoplastic polyolefin composition comprising

a) providing a reactive polyolefin composition as described above or below;
b) heating the reactive polyolefin composition to a temperature of 180°C to 300°C; and
c) subjecting the reactive polyolefin composition to a specific energy of equal to or more than 0.15 kWh/kg to obtain the thermoplastic polyolefin composition,

wherein process steps (b) and (c) are carried out simultaneously in an extruder and the extruder is operated at a mixer speed in the range of from 200 to 750 rpm.

The reactive polyolefin composition is preferably prepared as described above and below and preferably comprises the components as described above and below.

The reactive polyolefin composition is preferably heated to a temperature of from 180°C to 300°C, more preferably of from 220°C to 285°C and most preferably of from 240°C to 280°C.

For adjusting the temperature thereby also the nature of the polyolefin resin (A) can be considered. For polyolefin resins (A) with a lower melting temperature Tm the heating temperature can be selected at the lower end of the above range whereas for polyolefin resins (A) with a higher melting temperature Tm the heating temperature can be selected at the upper end of the above range.

Preferably the specific energy in process step c) is in the range of from 0.15 kWh/kg to 0.50 kWh/kg, more preferably in the range of from 0.15 kWh/kg to 0.40 kWh/kg and most preferably in the range of from 0.20 kWh/kg to 0.30 kWh/kg.

The specific energy is preferably introduced into the reactive polyolefin composition as kinetic energy, such as by means of shearing forces.

Thereby, the shearing forces to be applied to obtain a certain specific energy can depend on the density and viscosity of the polyolefin resin (A). The lower the density and the lower the viscosity the lower is the amount of shearing forces which need to be applied to obtain a certain specific energy.

It has been found in the process of the present invention that a minimum specific energy of 0.15 kWh/kg has to be applied in order to activate the reactivity of the rheology modifier (B). A specific energy higher than 0.50 kWh/kg can result in chain scissions of the polymer chains of the polyolefin resin (A).

The temperature and specific energy for reacting the reactive polyolefin composition are usually applied during the compounding step of the reactive polyolefin composition. The compounding step usually is conducted in a compounder such as a melt mixer or an extruder. The process steps b) and c) are carried out simultaneously in an extruder.

The extruder preferably is selected from a single screw extruder or a twin screw extruder.

In an especially preferred embodiment the extruder is a shear-induced extruder.

The temperature is preferably applied by extruding the reactive polyolefin composition at an extruding temperature in the above described range.

The specific energy is preferably applied by extruding the reactive polyolefin composition at a certain screw speed of the one or two screws of the extruder.

The further compounding conditions preferably are as follows:
The mixer speed is in the range of from 200 to 750 rpm, more preferably in the range of from 300 to 500 rpm such as suitably around 400 rpm.

The production rate preferably is preferably in the range of from 100 kg/hr to 1000 kg/hr, more preferably in the range of from 130 kg/hr to 750 kg/hr, still more preferably in the range of from 150 kg/hr to 500 kg/hr such as suitably in the range of from 170 kg/hr to 220 kg/hr.

The gear pump suction pressure is preferably in the range of from 1.0 bar to 10 bar, more preferably in the range of from 1.5 bar to 5.0 bar, such as suitably in the range of from 2.0 bar to 3.0 bar.

The gate opening is preferably in the range of from 10% to 50%, more preferably in the range of from 15% to 40%, such as suitably in the range of from 20% to 30%.

In the process of the present invention a thermoplastic polyolefin composition is formed by reacting the polyolefin resin (A) and the rheology modifier (B) under the reaction conditions described for process steps b) and c) as described above or below.

The thermoplastic polyolefin composition is preferably pelletized as known in the art.

It has been found that by reacting the polyolefin resin (A) and the rheology modifier (B) according to the process of the invention as described above and below that the resulting thermoplastic polyolefin composition has a higher viscosity at a constant shear stress of 747 Pa, $eta_{747}$, a higher complex viscosity at a shear rate of 0.05 rad/s, $eta_{0.05}$, a lower melt flow rate $MFR_5$, a broader flow rate ratio $FRR_{21/5}$, a broader shear thinning index $SHI_{0.5/300}$, a broader shear thinning index $SHI_{2.7/210}$, a broader shear thinning index $SHI_{5/200}$, and a higher die swell, compared to a thermoplastic polyolefin composition which includes the same polyolefin resin (A) and the same optional additives and carbon black but does not include the rheology modifier (B) and is compounded using comparable compounding conditions.

Whilst such rheological properties are desirable for the reasons set out above and below, it is important that the degree of modification, which can be indicated by one of the aforementioned properties, is not too pronounced, as to risk blocking the compounding equipment as described above. It is therefore preferable that a maximum limit on the effect of the invention is observed.

The thermoplastic polyolefin composition preferably has a viscosity at a constant shear stress of 747 Pa, $eta_{747}$ (Comp), which is at least 10% higher, more preferably at least 20% higher, still more preferably at least 30% higher and most preferably at least 50% higher as the viscosity at a constant shear stress of 747 Pa of the polyolefin composition based on polyolefin resin (A) without the rheology modifier (B), $eta_{747}$ (A).

The viscosity at constant shear stress of 747 Pa, $eta_{747}$ (Comp), of the thermoplastic polyolefin composition is preferably at most 500% higher, more preferably at most 200% higher, still more preferably at most 150% higher and most preferably at most 100% higher than the viscosity at a constant shear stress of 747 Pa of the polyolefin composition based on polyolefin resin (A) without the rheology modifier (B), $eta_{747}$ (A).

The viscosity at constant shear stress of 747 Pa, $eta_{747}$ (Comp), of the thermoplastic polyolefin composition is preferably in the range of 10 to 500% higher, more preferably 20 to 200% higher, still more preferably 30 to 150% higher and most preferably in the range of 50 to 100% higher than the viscosity at a constant shear stress of 747 Pa of the polyolefin composition based on polyolefin resin (A) without the rheology modifier (B), $eta_{747}$ (A).

The thermoplastic polyolefin composition further preferably has a complex viscosity at a shear rate of 0.05 rad/s, $eta_{0.05}$ (Comp), which is at least 5% higher, more preferably at least 10% higher, still more preferably at least 20% higher and most preferably at least 25% higher as the complex viscosity at a shear rate of 0.05 rad/s of the polyolefin composition based on polyolefin resin (A) without the rheology modifier (B), $eta_{0.05}$ (A).

The complex viscosity at a shear rate of 0.05 rad/s, $eta_{0.05}$ (Comp), of the thermoplastic polyolefin composition is preferably at most 70% higher, more preferably at most 50% higher, still more preferably at most 40% higher and most preferably at most 35% higher than the complex viscosity at a shear rate of 0.05 rad/s of the polyolefin composition based on polyolefin resin (A) without the rheology modifier (B), $eta_{0.05}$ (A).

The complex viscosity at a shear rate of 0.05 rad/s, $eta_{0.05}$ (Comp), of the thermoplastic polyolefin composition is preferably in the range of 5 to 70% higher, more preferably 10 to 50% higher, still more preferably 20 to 40% higher and most preferably in the range of 25 to 35% higher than the complex viscosity at a shear rate of 0.05 rad/s of the polyolefin composition based on polyolefin resin (A) without the rheology modifier (B), $eta_{0.05}$ (A).

Additionally, the thermoplastic polyolefin composition preferably has a melt flow rate $MFR_5$ (Comp), which is not more than 90%, preferably not more than 85%, more preferably not more than 80% and most preferably not more than 75% of the melt flow rate of the polyolefin composition based on polyolefin resin (A) without the rheology modifier (B), $MFR_5$ (A).

The melt flow rate $MFR_5$ (Comp) of the thermoplastic polyolefin composition is preferably not less than 50%, more preferably not less than 60%, still more preferably not less than 65% and most preferably not less than 70% of the melt flow rate of the polyolefin composition based on polyolefin resin (A) without the rheology modifier (B), $MFR_5$ (A).

The melt flow rate $MFR_5$ (Comp) of the thermoplastic polyolefin composition is preferably in the range of 50 to 90 %, more preferably 60 to 85%, still more preferably 65 to 80% and most preferably in the range of 70 to 75% of the melt flow rate of the polyolefin composition based on polyolefin resin (A) without the rheology modifier (B), $MFR_5$ (A).

Further, the thermoplastic polyolefin composition preferably has a flow rate ratio $FRR_{21/5}$ (Comp), which is at least 1.0% higher, more preferably at least 1.5% higher, still more preferably at least 2.0% higher and most preferably at least 5.0% higher as the flow rate ratio of the polyolefin composition based on polyolefin resin (A) without the rheology modifier (B), $FRR_{21/5}$ (A).

The flow rate ratio $FRR_{21/5}$ (Comp) of the thermoplastic polyolefin composition is preferably at most 30.0% higher, more preferably at most 20.0% higher, still more preferably at most 15.0% higher and most preferably at most 10.0% higher than the flow rate ratio the polyolefin composition based on polyolefin resin (A) without the rheology modifier (B), $FRR_{21/5}$ (A).

The flow rate ratio $FRR_{21/5}$ (Comp) of the thermoplastic polyolefin composition is preferably in the range of 1.0 to 30.0% higher, more preferably 1.5 to 20.0% higher, still more preferably 2.0 to 15.0% higher and most preferably in the range of 5.0 to 10.0% higher than the flow rate ratio the polyolefin composition based on polyolefin resin (A) without the rheology modifier (B), $FRR_{21/5}$ (A).

In an equally preferred embodiment, the flow rate ratio $FRR_{21/5}$ (Comp) of the thermoplastic polyolefin composition is preferably in the range of 0.5 to 35 % higher, more preferably 1.0 to 20.0% higher, still more preferably 1.5 to 15.0% higher and most preferably in the range of 5.0 to 20.0% higher than the flow rate ratio the polyolefin composition based on polyolefin resin (A) without the rheology modifier (B), $FRR_{21/5}$ (A).

Still further, the thermoplastic polyolefin composition preferably has a shear thinning index $SHI_{5/200}$ (Comp), which is at least 2.0% higher, more preferably at least 3.5% higher, still more preferably at least 5.0% higher and most preferably at least 7.5% higher than the shear thinning index of the polyolefin composition based on polyolefin resin (A) without the rheology modifier (B), $SHI_{5/200}$ (A).

The shear thinning index $SHI_{5/200}$ (Comp) of the thermoplastic polyolefin composition is preferably at most 80.0% higher, more preferably at most 65.0% higher, still more preferably at most 40.0% higher and most preferably at most 25.0% higher than the shear thinning index of the polyolefin composition based on polyolefin resin (A) without the rheology modifier (B), $SHI_{5/200}$ (A).

The shear thinning index $SHI_{5/200}$ (Comp) of the thermoplastic polyolefin composition is preferably in the range of 2.0 to 80.0% higher, more preferably 3.5 to 65.0% higher, still more preferably 5.0 to 40.0% higher and most preferably in the range of 7.5 to 25.0% higher than the shear thinning index of the polyolefin composition based on polyolefin resin (A) without the rheology modifier (B), $SHI_{5/200}$ (A).

It is additionally preferred that the flow rate ratio $FRR_{21/5}$ (Comp) of the thermoplastic polyolefin composition is preferably between 5 and 55, more preferably between 10 and 50, most preferably between 15 and <50.

Thermoplastic polyolefin composition

Additionally, the present invention relates to a thermoplastic polyolefin composition obtainable by the process according to the present invention.

Thereby, the thermoplastic polyolefin composition preferably comprises the polyolefin resin (A), the rheology modifier (B) in their reacted form as described above and below as well as optionally the additives (C) and/or carbon black as described above or below.

The thermoplastic polyolefin composition preferably shows the properties as described above or below.

Article

Still further, the present invention relates to an article which comprises the thermoplastic polyolefin composition as described above or below or obtainable by the process as described above or below.

Preferably the article is selected from a pipe, a film, a blow moulded article or any other extruded article.

No specific requirements are known to the inventors for treating the thermoplastic polyolefin composition when forming the article of the present invention.

Use

Still further, the present invention also relates to the use of a rheology modifier (B), which is free of peroxide initiator, in a reactive polyolefin composition comprising a polyolefin resin (A) and the rheology modifier (B), which is free of peroxide initiator, as described above or below, for increasing the viscosity at a constant shear stress of 747 Pa of the final thermoplastic polyolefin composition, $eta_{747}$ (Comp), and reducing the melt flow rate of the final thermoplastic polyolefin composition, $MFR_5$ (Comp), by reacting the polyolefin resin (A) and the rheology modifier (B) at a temperature in the range of from 180°C to 300°C and a specific energy equal to or greater than 0.15 kWh/kg, in a compounder.

**Examples**

1. Definitions

a) *Melt Flow Rate*

The melt flow rate (MFR) is determined according to ISO 1133 and is indicated in g/10 min.

The MFR is an indication of the flowability, and hence the processability, of the polymer. The higher the melt flow rate, the lower the viscosity of the polymer. The $MFR_5$ of polyethylene is measured at a temperature of 190 °C and a load of 5 kg, the $MFR_2$ of polyethylene at a temperature of 190 °C and a load of 2.16 kg and the $MFR_{21}$ of polyethylene is measured at a temperature of 190 °C and a load of 21.6 kg. The quantity FRR (flow rate ratio) denotes the ratio of flow rates at different loads. Thus, $FRR_{21/5}$ denotes the value of $MFR_{21}/MFR_5$.

b) *Density*

Density of the polymer was measured according to ISO 1183-1:2004 Method A on compression moulded specimen prepared according to EN ISO 1872-2 (Feb 2007) and is given in $kg/m^3$.

c) *Comonomer content*

Comonomer (1-hexene) content was measured with Fourier transform infrared spectroscopy (FTIR) calibrated with $^{13}$C-NMR as described in EP 2 228 394 A1)

d) *Dynamic Shear Measurements (frequency sweep measurements)*

The characterization of polymer melts by dynamic shear measurements complies with ISO standards 6721-1 and 6721-10. The measurements were performed on an Anton Paar MCR301 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.0154 and 500 rad/s and setting a gap of 1.2 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \, \sin(\omega t) \qquad\qquad (1)$$

If the applied strain is within the linear viscoelastic regime, the resulting sinusoidal stress response can be given by

$$\sigma(t) = \sigma_0 \, \sin(\omega t + \delta) \qquad\qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time. Dynamic test results are typically expressed by means of several different rheological functions, namely the shear storage modulus, G', the shear loss modulus, G", the complex shear modulus, G*, the complex shear viscosity, $\eta$*, the dynamic shear viscosity, $\eta$', the out-of-phase component of the complex shear viscosity, $\eta$", and the loss tangent, tan $\eta$, which can be expressed as follows:

$$G' = \frac{\sigma_0}{\gamma_0} \cos\delta \ [Pa] \qquad\qquad (3)$$

$$G'' = \frac{\sigma_0}{\gamma_0} \sin\delta \ [Pa] \qquad\qquad (4)$$

$$G* = G' + iG'' \ [Pa] \qquad\qquad (5)$$

$$\eta* = \eta' - i\eta'' \ [Pa \cdot s] \qquad\qquad (6)$$

$$\eta' = \frac{G''}{\omega} \ [Pa \cdot s] \qquad\qquad (7)$$

$$\eta'' = \frac{G'}{\omega} \; [\text{Pa} \cdot \text{s}] \qquad\qquad (8)$$

Besides the above mentioned rheological functions one can also determine other rheological parameters such as the so-called elasticity index EI(x). The elasticity index EI(x) is the value of the storage modulus, G', determined for a value of the loss modulus, G", of x kPa and can be described by equation 9.

$$EI(x) = G' \text{ for } (G'' = x \text{ kPa}) \; [\text{Pa}] \qquad\qquad (9)$$

For example, the EI(5 kPa) is defined by the value of the storage modulus G', determined for a value of G" equal to 5 kPa.

The determination of so-called Shear Thinning Indexes is done, as described in equation 10.

$$SHI_{(x/y)} = \frac{\text{Eta* for } (G^* = x \text{ kPa})}{\text{Eta* for } (G^* = y \text{ kPa})} \qquad\qquad (10)$$

For example, the $SHI_{(0.05/300)}$ is defined by the value of the complex viscosity, in Pa.s, determined for a value of G* equal to 0.05 kPa, divided by the value of the complex viscosity, in Pa.s, determined for a value of G* equal to 300 kPa. Accordingly, the $SHI_{(5/200)}$ is defined by the value of the complex viscosity, in Pa.s, determined for a value of G* equal to 5 kPa, divided by the value of the complex viscosity, in Pa.s, determined for a value of G* equal to 200 kPa. Accordingly, the $SHI_{(2.7/210)}$ is defined by the value of the complex viscosity, in Pa.s, determined for a value of G* equal to 2.7 kPa, divided by the value of the complex viscosity, in Pa.s, determined for a value of G* equal to 210 kPa.

The values of storage modulus (G'), loss modulus (G"), complex modulus (G*) and complex viscosity ($\eta^*$) were obtained as a function of frequency ($\omega$).

Thereby, e.g. $\eta^*_{300\text{rad/s}}$ (eta*$_{300\text{rad/s}}$) is used as abbreviation for the complex viscosity at the frequency of 300 rad/s and $\eta^*_{0.05\text{rad/s}}$ (eta*$_{0.05\text{rad/s}}$) is used as abbreviation for the complex viscosity at the frequency of 0.05 rad/s.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

*e) Eta$_{747}$.*

One method which correlates well with the sagging properties, and is used in connection with the present invention relates to the rheology of the polymer and is based on determination of the viscosity of the polymer at a constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow.

The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm.

The sample is temperature conditioned before the measurement is started. The measurement is performed at 190 °C. After temperature conditioning the measurement starts by applying the predetermined stress of 747 Pa. The stress is maintained during the measurement time of 1860 s. The eta$_{747}$ parameter is calculated by averaging the last 5 points of the measured transient shear viscosity. These are found to be in the interval from 1620 to 1860 s. Therefore, the $eta_{747}$ is determined at a corresponding time of 1740 s.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

*f) Tensile modulus (23 °C)*

As a measure for stiffness, the tensile modulus (E-modulus) of the compositions was measured at 23 °C on compression molded specimens according to ISO 527-2:1993. The specimens (1B type) were cut from plaques of 4 mm thickness prepared by compression molding according to ISO 293:2004 using the conditions defined in chapter 3.3 of ISO 1872-2:2007. The modulus was measured at a speed of 1 mm/min.

*g) Tensile properties (23 °C)*

The tensile strength at break and elongation at break (i.e. tensile strain at break) is measured according to ISO 527-1 (cross head speed 50 mm/min) at a temperature of 23 °C.

*h) Charpy Notched Impact Strength*

Charpy impact strength is determined according to ISO179/1eA:2000 on V-notched samples of $80*10*4$ mm$^3$ at -20°C (Charpy impact strength (-20 °C)) and at 23°C (Charpy impact strength (23 °C)). Samples were cut from plaques of 4 mm thickness prepared by compression molding according to ISO 293:2004 using the conditions defined in chapter 3.3 of ISO 1872-2:2007.

*i) Melting temperature ($T_m$) and crystallization temperature ($T_{cr}$)*

The melting temperature of the used polymers was measured in accordance with ISO 11357-3. $T_m$ and $T_{cr}$ were measured with TA Instruments Q2000 differential scanning calorimetry (DSC) on $3 \pm 0.5$ mg samples. Both crystallization and melting curves were obtained during 10 °C/min cooling and heating scans between 0 and 200 °C. Melting and crystallization temperatures were taken as the peaks of endotherms and exotherms, respectively.

*j) $F_{30}$ Melt Strength*

The test described herein follows ISO 16790:2005. An apparatus according to Fig. 1 of ISO 16790:2005 is used.

The strain hardening behaviour is determined by the method as described in the article "Rheotens-Mastercurves and Drawability of Polymer Melts", M. H. Wagner, Polymer Engineering and Science, Vol. 36, pages 925 to 935. The strain hardening behaviour of polymers is analysed by Rheotens apparatus (product of Göttfert, Siemensstr.2, 74711 Buchen, Germany) in which a melt strand is elongated by drawing down with a defined acceleration. The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder Göttfert X-trude 300 system and a gear pump with cylindrical die (L/D = 6.0/2.0 mm). For measuring F30 melt strength and v30 melt extensibility, the pressure at the extruder exit (= gear pump entry) is set to 30 bars by by-passing a part of the extruded polymer.

The gear pump was pre-adjusted to a strand extrusion rate of 5 mm/s, and the melt temperature was set to 200°C. The spinline length between die and Rheotens wheels was 100 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec2. The Rheotens was operated in combination with the PC program (rheotens). This is a real-time data-acquisition program, which displays and stores the measured data of tensile force and drawdown speed. The end points of the Rheotens curve (force versus pulley rotary speed), where the polymer strand ruptures, are taken as the F30 melt strength and drawdown velocity.

*k) Die Swell*

Please include description of the measurement method

Die swell properties are measured at 190 °C for PE (or 230°C for PP) and shear/load (2.16 kg and/or 5kg) using melt-indexers, such as Göttfert MI-4. Using the melt indexer or capillary rheometer, the polymer melt is forced to flow from a reservoir (barrel) through a capillary die of known dimension. When a given load (weight) or shear rate (piston speed) is applied, the material undergoes a contraction flow. After the material flows out from the capillary die, and due to its inherent/specific viscoelastic properties, a phenomenon characterized by a "swelling" of the extrudate takes place. This phenomenon is mentioned as die swell.

Three pieces of ca 2.5 cm long strands are collected from the Melt Indexer and measured with a caliper (readability 0.01 mm). The die swell results have been expressed as swell ratios, i.e. ratios of the diameter of the extruded strand to the diameter of the capillary die (=2.095 mm). The reported swell ratios were calculated from the average of measured strand diameters. The die swell can also be expressed by the percentage change in the extrudate diameter relative to the die diameter (percent swell).

*I) Strain hardening*

Please include description of the measurement method

The strain hardening test is a modified tensile test performed at 80 °C on a specially prepared thin sample. The Strain Hardening Modulus (MPa), <Gp>, is calculated from True Strain-True Stress curves; by using the slope of the curve in the region of True Strain, $\lambda$, is between 8 and 12.

The true strain, $\lambda$, is calculated from the length, l (mm), and the gauge length, $l_0$ (mm), as shown by Equation 1.

$$\lambda = \frac{l}{l_0} = 1 + \frac{\Delta l}{l_0} \qquad (1)$$

where $\Delta l$ is the increase in the specimen length between the gauge marks, (mm). The true stress, $\sigma$true (MPa), is calculated according to formula 2, assuming conservation of volume between the gauge marks:

$$\sigma_{true} = \sigma_n \lambda \qquad (2)$$

where $\sigma_n$ is the engineering stress.

The Neo-Hookean constitutive model (Equation 3) is used to fit the true strain- true stress data from which <Gp> (MPa) for 8 < $\lambda$ < 12 is calculated.

$$\sigma_{true} = \frac{<Gp>}{20}\left(\lambda^2 - \frac{1}{\lambda}\right) + C \qquad (3)$$

where C is a mathematical parameter of the constitutive model describing the yield stress extrapolated to $\lambda = 0$.

Initially five specimens are measured. If the variation coefficient of <Gp> is greater than 2,5 %, then two extra specimens are measured. In case straining of the test bar takes place in the clamps the test result is discarded.

The PE granules of materials were compression molded in sheets of 0.30 mm thickness according to the press parameters as provided in ISO 1872-2, Table 2.

After compression molding of the sheets, the sheets were annealed to remove any orientation or thermal history and maintain isotropic sheets. Annealing of the sheets was performed for 1 h in an oven at a temperature of $(120 \pm 2)$ °C followed by slowly cooling down to room temperature by switching off the temperature chamber. During this operation free movement of the sheets was allowed.

Next, the test pieces were punched from the pressed sheets. The specimen geometry of the modified ISO 37:1994 Type 3 (Figure 3) was used.

The sample has a large clamping area to prevent grip slip, dimensions given the below table.

Table: Dimensions of Modified ISO 37:1994 Type 3

| Dimension | | Size (mm) |
|---|---|---|
| L | start length between clamps | 30.0 +/- 0.5 |
| $l_0$ | Gauge length | 12.5 +/- 0.1 |
| $l_1$ | Prismatic length | 16.0 +/- 1.0 |
| $l_3$ | Total length | 70 |
| $R_1$ | Radius | 10.0 +/- 0.03 |

(continued)

| Dimension | | Size (mm) |
|---|---|---|
| $R_2$ | Radius | 8.06 +/- 0.03 |
| $b_1$ | Prismatic width | 4.0 +/- 0.01 |
| $b_2$ | Clamp width | 20.0 +/- 1.0 |
| h | Tickness | 0.30 + 0.05/0.30 - 0.03 |

The punching procedure is carried out in such a way that no deformation, crazes or other irregularities are present in the test pieces.

The thickness of the samples was measured at three points of the parallel area of the specimen; the lowest measured value of the thickness of these measurements was used for data treatment.

The following procedure is performed on a universal tensile testing machine having controlled temperature chamber and non-contact extensometer:

1. Condition the test specimens for at least 30 min in the temperature chamber at a temperature of $(80 \pm 1)$ °C prior to starting the test.
2. Clamp the test piece on the upper side.
3. Close the temperature chamber.
4. Close the lower clamp after reaching the temperature of $(80 \pm 1)$ °C.
5. Equilibrate the sample for 1 min between the clamps, before the load is applied and measurement starts.
6. Add a pre-load of 0.5 N at a speed of 5 mm/min.
7. Extend the test specimen along its major axis at a constant traverse speed (20 mm/min) until the sample breaks.

During the test, the load sustained by the specimen is measured with a load cell of 200 N. The elongation is measured with a non-contact extensometer.

2. Materials

a) Preparation of the polymerization catalyst for Polyethylene Resins PE1-5

The catalyst was prepared as described in example 1 of WO 99/51646

b) Polyethylene Resin PE1

Into a first loop reactor having a volume of 50 dm$^3$ and operating at a temperature of 70 °C and a pressure of 57.4 bar propane ($C_3$, 50 kg/h), ethylene ($C_2$, 2 kg/h), and hydrogen ($H_2$, 5 g/h) were introduced for conducting a pre-polymerization step. In addition the Ziegler-Natta catalyst prepared as described above under a) was introduced into the reactor together with triethylaluminium cocatalyst so that the ratio of aluminium to titanium was 15 mol/mol.

The slurry was withdrawn intermittently from the prepolymerization reactor and directed to a second loop reactor having a volume of 500 dm$^3$ and operating at a temperature of 95 °C and a pressure of 55.8 bar. Additionally, propane, ethylene and hydrogen were fed to the second loop reactor whereby the ethylene concentration and the hydrogen to ethylene ratio for example PE1 are listed in Table 1. The production rate, split, the density and melt index of the polymer fractions produced in the second loop reactor are listed in Table 1.

The slurry was withdrawn intermittently from the second loop reactor by using settling legs and directed to a gas phase reactor. The gas phase reactor was operated at a temperature of 85 °C and a pressure of 20 bar. Additional ethylene, 1-hexene comonomer ($C_6$), and hydrogen were fed whereby the ethylene concentration, the 1-hexene to ethylene ratio and the hydrogen to ethylene ratio as well as the production split and the density of the polymers of example Ex 1 withdrawn from the gas phase reactor are listed in Table 1.

c) Polyethylene Resins PE2, PE3, PE4 and PE5

For polyethylene resins PE2, PE3, PE4 and PE5 the same polymerization catalyst and the same principle multistage process were used as for Ex1. The polymerization conditions where varied as listed in Table 1.

Table 1: Polymerization conditions

|  | PE1 | PE2 | PE3 | PE4 | PE5 |
|---|---|---|---|---|---|
| **Prepolymerizer:** |  |  |  |  |  |
| Temperature [°C] | 70 | 70 | 70 | 70 | 60 |
| Pressure [bar] | 57.4 | 57.3 | 65 | 65 | 65 |
| Split [wt%] | 1.7 | 1.9 | 2 | 2 | 2 |
| **Loop:** |  |  |  |  |  |
| Temperature [°C] | 95 | 95 | 95 | 95 | 95 |
| Pressure [bar] | 55.8 | 55.9 | 65 | 65 | 65 |
| $H_2/C_2$ [mol/kmol] | 500 | 630 | 1007 | 1007 | 1016 |
| $C_2$-concentration [mol%] | 5.3 | 7.3 | 3.9 | 3.9 | 3.8 |
| Production Rate [kg/h] | 50.7 | 49 | 46.2 | 16 | 51.8 |
| Split incl. Prepol. [wt%] | 47 | 50 | 42 | 45 | 45 |
| $MFR_2$ [g/10 min] | 290 | 220 | 277 | 277 | 300 |
| Density [kg/m$^3$] | 972 | 972 | 972.8 | 972.8 | 972.8 |
| **Gas phase:** |  |  |  |  |  |
| Comonomer | Hexene | Hexene | Butene | Butene | Hexene |
| Temperature [°C] | 85 | 85 | 85 | 85 | 85 |
| Pressure [bar] | 20 | 20 | 20 | 20 | 20 |
| $H_2/C_2$ [mol/kmol] | 2.8 | 5.0 | 54.1 | 33.8 | 137 |
| $C_6/C_2$ [mol/kmol] | 68 | 31 | --- | --- | 67.1 |
| $C_4/C_2$ [mol/kmol] | --- | --- | 197.5 | 62 | --- |
| $C_2$-concentration [mol%] | 6.2 | 5.6 | 10 | 10 | 10 |
| Production Rate [kg/h] | 58 | 49 | 63.8 | 17.6 | 56.2 |
| Split [wt%] | 53 | 50 | 58 | 55 | 55 |
| Density [kg/m$^3$] | 949 | 950 | 940 | 944 | 952 |

d) Compounding of Polyethylene Resin PE1

The Polyethylene Resin PE1 was purged with nitrogen (about 50 kg/h) for one hour, stabilised with commercial stabilisers, 1100 ppm of Irganox 1010, 1100 ppm Irgafos 168 and 1100 ppm Ca-stearate and then extruded together with 2.3 wt% carbon black to pellets in a Mixtron LCM 80 counter-rotating twin screw extruder (manufactured by KOBELCO, Kobe Steel, Japan) using the compounding conditions as listed below in Table 2.

For Comparative Example CE1 no rheology modifier was mixed into the polyethylene resin PE1.

For Inventive examples IE1 and IE2 hexamethylene-1,6-di maleimide, commercially available as Nexamite A48 from Nexam Chemical, Lund (Sweden) was mixed as rheology modifier into the polyethylene resin PE1 in the amounts as listed in Table 2.

Table 2 shows the compounding conditions of the compounded composition as well as the properties of the compounded compositions of CE1, IE1 and IE2.

Table 2: Compounding of PE1

|  | CE1 | IE1 | IE2 |
|---|---|---|---|
| Compounded composition |  |  |  |
| PE1 [wt%] | 97.35 | 97.32 | 97.30 |
| Additives [ppm] | 3500 | 3500 | 3500 |

(continued)

| | CE1 | IE1 | IE2 |
|---|---|---|---|
| Compounded composition | | | |
| Carbon Black [wt%] | 2.3 | 2.3 | 2.3 |
| Rheology modifier [ppm] | 0 | 300 | 500 |
| Compounding Conditions | | | |
| Temperature [°C] | 275 | 275 | 275 |
| Production Rate [kg/hr] | 200 | 200 | 200 |
| Mixer Speed [rpm] | 400 | 400 | 400 |
| Gear pump suc pressure [bar] | 2.7 | 2.7 | 2.7 |
| Gate opening [%] | 28.1 | 28.1 | 28.1 |
| Specific Energy [kWh/kg] | 0.258 | 0.256 | 0.260 |
| Properties of the compounded compositions | | | |
| Density [$kg/m^3$] | 958.9 | 958.3 | 959.1 |
| $MFR_5$ [g/10 min] | 0.28 | 0.20 | 0.20 |
| $MFR_{21}$ [g/10 min] | 9.14 | 7.00 | 7.88 |
| $FRR_{21/5}$ | 33.2 | 35.8 | 40.1 |
| Laser Die Swell, dyn. at 72 $s^{-1}$ | 1.52 | 1.56 | 1.61 |
| Laser Die Swell, stat. at 72 $s^{-1}$ | 1.60 | 1.63 | 1.68 |
| $Eta_{747}$ [kPa·s] | 642 | 1395 | 1409 |
| $Eta_{0.05/300}$ | 139 | 163 | 174 |
| $SHI_{5/200}$ | 47.8 | 66.2 | 78.1 * |
| Tm [°C] | 129.8 | 129.8 | 129.8 |
| Tcr [°C] | 119.3 | 119.4 | 119.4 |
| Melt strength [cN] | 30.9 | 33.4 | 32.8 |
| Draw-down velocity [mm/s] | 167 | 178 | 178 |
| Tensile Strength at break [MPa] | 30.9 | 26.5 | 32.9 |
| Elongation at break [%] | 607 | 570 | 670 |
| Tensile Modulus [MPa] | 1010 | 982 | 1020 |
| Charpy NIS, -20°C [$kJ/m^2$] | 19.0 | 18.5 | 18.2 |
| Charpy NIS, 23°C [$kJ/m^2$] | 32.6 | 34.3 | 33.5 |
| Strain Hardening [MPa] | 67.3 | 65.9 | 66.2 |
| *extrapolated | | | |

e) Compounding of Polyethylene Resin PE2

The Polyethylene Resin PE2 was purged with nitrogen (about 50 kg/h) for one hour, stabilised with commercial stabilisers, 1100 ppm of Irganox 1010, 1100 ppm Irgafos 168 and 1100 ppm Ca-stearate and then extruded together with 2.3 wt% carbon black to pellets in a Mixtron LCM 80 counter-rotating twin screw extruder (manufactured by KOBELCO, Kobe Steel, Japan) using the compounding conditions as listed below in Table 3.

For Comparative Example CE2 no rheology modifier was mixed into the polyethylene resin PE1.

For Inventive examples IE3 and IE4 hexamethylene-1,6-di maleimide, commercially available as Nexamite A48 from Nexam Chemical, Lund (Sweden) was mixed as rheology modifier into the polyethylene resin PE1 in the amounts as listed in Table 3.

Table 3 shows the compounding conditions of the compounded composition as well as the properties of the compounded compositions of CE2, IE3 and IE4.

Table 3: Compounding of PE2

| | CE2 | IE3 | IE4 |
|---|---|---|---|
| Compounded composition | | | |
| PE1 [wt%] | 97.35 | 97.34 | 97.32 |
| Additives [ppm] | 3500 | 3500 | 3500 |
| Carbon Black [wt%] | 2.3 | 2.3 | 2.3 |
| Rheology modifier [ppm] | 0 | 100 | 300 |
| Compounding Conditions | | | |
| Temperature [°C] | 252 | 262 | 262 |
| Production Rate [kg/hr] | 189 | 189 | 189 |
| Mixer Speed [rpm] | 400 | 400 | 400 |
| Gear pump suc pressure [bar] | 2.7 | 2.7 | 2.7 |
| Gate opening [%] | 29.3 | 29.3 | 29.3 |
| Specific Energy [kWh/kg] | 0.260 | 0.260 | 0.260 |
| Properties of the compounded compositions | | | |
| $MFR_5$ [g/10 min] | 0.15 | 0.15 | 0.11 |
| $MFR_{21}$ [g/10 min] | 5.58 | 5.55 | 4.53 |
| $FRR_{21/5}$ | 36 | 38 | 40 |
| Laser Die Swell, dyn. at 72 $s^{-1}$ | 1.48 | 1.51 | 1.57 |
| Laser Die Swell, stat. at 72 $s^{-1}$ | 1.53 | 1.59 | 1.63 |
| $Eta_{747}$ [kPa·s] | 957 | 1337 | 1875 |
| $Eta_{0.05/300}$ | 164 | 180 | 211 |
| Melt strength [cN] | 33.8 | 35.3 | 38.7 |
| Draw-down velocity [mm/s] | 164 | 167 | 169 |
| Tensile Strength at break [MPa] | 16.3 | 15.4 | n.m. |
| Elongation at break [%] | 441 | 381 | n.m. |
| Tensile Modulus [MPa] | 1250 | 1207 | n.m. |
| Charpy NIS, -20°C [$kJ/m^2$] | 23.7 | 23.6 | n.m. |
| Charpy NIS, 23°C [$kJ/m^2$] | 31.8 | 31.2 | n.m. |
| Strain Hardening [MPa] | 46.8 | 45.9 | 49.7 |

f) Compounding of Polyethylene Resin PE3

The Polyethylene Resin PE3 was purged with nitrogen (about 50 kg/h) for one hour, stabilised with commercial stabilisers, 1100 ppm of Irganox 1010, 1100 ppm Irgafos 168 and 1100 ppm Ca-stearate and then extruded to pellets in a Mixtron LCM 80 counter-rotating twin screw extruder (manufactured by KOBELCO, Kobe Steel, Japan) using the compounding conditions as listed below in Table 4.

For Comparative Example CE3 no rheology modifier was mixed into the polyethylene resin PE3.

For Inventive examples IE5, IE6 and IE7 hexamethylene-1,6-di maleimide, commercially available as Nexamite A48 from Nexam Chemical, Lund (Sweden) was mixed as rheology modifier into the polyethylene resin PE3 in the amounts as listed in Table 4.

Table 4 shows the compounding conditions of the compounded composition as well as the properties of the compounded compositions of CE3, IE5, IE6 and IE7.

Table 4: Compounding of PE3

| | CE3 | IE5 | IE6 | IE7 |
|---|---|---|---|---|
| Compounded composition | | | | |
| PE3 [wt%] | 99.650 | 99.635 | 99.620 | 99.600 |
| Additives [ppm] | 3500 | 3500 | 3500 | 3500 |
| Rheology modifier [ppm] | 0 | 150 | 300 | 500 |
| Compounding Conditions | | | | |
| Temperature [°C] | 262 | 264 | 266 | 268 |
| Production Rate [kg/hr] | 200 | 200 | 200 | 200 |
| Mixer Speed [rpm] | 400 | 400 | 400 | 400 |
| Gear pump suc pressure [bar] | 2.7 | 2.7 | 2.7 | 2.7 |
| Gate opening [%] | 27.6 | 27.6 | 27.6 | 27.6 |
| Specific Energy [kWh/kg] | 0.247 | 0.243 | 0.240 | 0.244 |
| Properties of the compounded compositions | | | | |
| $MFR_5$ [g/10 min] | 0.62 | 0.54 | 0.46 | 0.41 |
| $MFR_{21}$ [g/10 min] | 12.1 | 11.1 | 10.1 | 9.59 |
| $FRR_{21/5}$ | 20 | 21 | 22 | 23 |
| Die Swell at 5 kg | 1.29 | 1.36 | 1.42 | 1.46 |
| $Eta_{747}$ [kPa·s] | 93 | 142 | 265 | 496 |
| $Eta_{0.05/300}$ | 54 | 62 | 74 | 88 |
| $SHI_{2.7/210}$ | 20.4 | 23.9 | 32.0 | 45.8 |
| $SHI_{5/200}$ | 15.9 | 17.9 | 22.1 | 27.9 |

g) Compounding of Polyethylene Resin PE4

The Polyethylene Resin PE4 was purged with nitrogen (about 50 kg/h) for one hour, stabilised with commercial stabilisers, 1100 ppm of Irganox 1010, 1100 ppm Irgafos 168 and 1100 ppm Ca-stearate and then extruded to pellets in a Mixtron LCM 80 counter-rotating twin screw extruder (manufactured by KOBELCO, Kobe Steel, Japan) using the compounding conditions as listed below in Table 2.

For Comparative Example CE4 no rheology modifier was mixed into the polyethylene resin PE1.

For Inventive examples IE8, IE9 and IE10 hexamethylene-1,6-di maleimide, commercially available as Nexamite A48 from Nexam Chemical, Lund (Sweden) was mixed as rheology modifier into the polyethylene resin PE4 in the amounts as listed in Table 5.

Table 5 shows the compounding conditions of the compounded composition as well as the properties of the compounded compositions of CE4, IE8, IE9 and IE10.

Table 5: Compounding of PE4

| | CE4 | IE8 | IE9 | IE10 |
|---|---|---|---|---|
| Compounded composition | | | | |
| PE4 [wt%] | 99.650 | 99.635 | 99.620 | 99.600 |
| Additives [ppm] | 3500 | 3500 | 3500 | 3500 |
| Rheology modifier [ppm] | 0 | 150 | 300 | 500 |

(continued)

| Compounding Conditions | | | | |
|---|---|---|---|---|
| Temperature [°C] | 254.6 | 257.8 | 262.7 | 263.1 |
| Production Rate [kg/hr] | 195 | 195 | 195 | 195 |
| Mixer Speed [rpm] | 400 | 400 | 400 | 400 |
| Gear pump suc pressure [bar] | 2.5 | 2.5 | 2.5 | 2.5 |
| Gate opening [%] | 25 | 25 | 25 | 25 |
| Specific Energy [kWh/kg] | 0.229 | 0.227 | 0.226 | 0.225 |
| Properties of the compounded compositions | | | | |
| $MFR_5$ [g/10 min] | 1.48 | 1.49 | 1.33 | 1.34 |
| $MFR_{21}$ [g/10 min] | 28.9 | 29.5 | 27.8 | 28.0 |
| $FRR_{21/5}$ | 19.5 | 19.8 | 20.8 | 20.8 |
| Die Swell at 2.16 kg | 1.25 | 1.31 | 1.43 | 1.46 |
| $Eta_{747}$ [kPa·s] | 37 | 42 | 62 | 65 |
| $Eta_{0.05/300}$ | 34 | 38 | 44 | 45 |
| $SHI_{2.7/210}$ | 20.6 | 22.7 | 27.3 | 28.0 |
| $SHI_{5/200}$ | 16.1 | 17.4 | 20.1 | 20.5 |

h) Compounding of Polyethylene Resin PE5

The Polyethylene Resin PE5 was purged with nitrogen (about 50 kg/h) for one hour, stabilised with commercial stabilisers, 1100 ppm of Irganox 1010, 1100 ppm Irgafos 168 and 1100 ppm Ca-stearate and then extruded to pellets in a Mixtron LCM 80 counter-rotating twin screw extruder (manufactured by KOBELCO, Kobe Steel, Japan) using the compounding conditions as listed below in Table 6.

For Comparative Example CE5 no rheology modifier was mixed into the polyethylene resin PE5.

For Inventive examples IE11, IE12 and IE13 hexamethylene-1,6-di maleimide, commercially available as Nexamite A48 from Nexam Chemical, Lund (Sweden) was mixed as rheology modifier into the polyethylene resin PE5 in the amounts as listed in Table 6.

Table 6 shows the compounding conditions of the compounded composition as well as the properties of the compounded compositions of CE5, IE11, IE12 and IE13.

Table 6: Compounding of PE5

| | CE5 | IE11 | IE12 | IE13 |
|---|---|---|---|---|
| Compounded composition | | | | |
| PE5 [wt%] | 99.650 | 99.635 | 99.620 | 99.600 |
| Additives [ppm] | 3500 | 3500 | 3500 | 3500 |
| Rheology modifier [ppm] | 0 | 150 | 300 | 500 |
| Compounding Conditions | | | | |
| Temperature [°C] | 245.4 | 247.5 | 253.4 | 255.2 |
| Production Rate [kg/hr] | 190 | 190 | 190 | 190 |
| Mixer Speed [rpm] | 400 | 400 | 400 | 400 |
| Gear pump suc pressure [bar] | 2.5 | 2.5 | 2.5 | 2.5 |
| Gate opening [%] | 20 | 20 | 20 | 20 |
| Specific Energy [kWh/kg] | 0.223 | 0.225 | 0.220 | 0.220 |

(continued)

| Properties of the compounded compositions | | | | |
|---|---|---|---|---|
| MFR$_5$ [g/10 min] | 2.51 | 2.48 | 2.21 | 2.16 |
| MFR$_{21}$ [g/10 min] | 51.6 | 51.3 | 46.7 | 45.8 |
| FRR$_{21/5}$ | 20.6 | 20.7 | 21.1 | 21.2 |
| Die Swell at 2.16 kg | 1.36 | 1.40 | 1.45 | 1.48 |
| Eta$_{747}$ [kPa·s] | 28 | 30 | 38 | 42 |
| Eta$_{0.05/300}$ | 33 | 35 | 37 | 39 |
| SHI$_{2.7/210}$ | 27.5 | 30.0 | 30.5 | 31.3 |
| SHI$_{5/200}$ | 20.7 | 22.2 | 22.4 | 22.7 |

i) Summary of the Results

From the above examples which show the differences in properties of thermoplastic polyethylene compositions which include hexamethylene-1,6-di-maleimide as rheology modifier over a broad range of different polyethylene compositions, the following conclusions can be drawn:

- Decrease of melt flow rate MFR

The decrease of the melt flow rate of the polyethylene compositions including the rheology modifier indicates that the viscosities of the polyethylene compositions in inventive examples including the rheology modifier have increased compared to the comparative examples. This could be attributed to potential chain-extension mechanism caused by the rheology modifier, which tend to increase the chain length and hence, the molecular weight.

• Increase of FRR and SHI

Both parameters provide insight on molecular weight distribution of the polymer. As both FRR and SHI have been found to increase, it is expected that the polyethylene compositions containing the rheology modifier have a broadened the molecular weight distribution from rheological perspective.

• Increase of Die Swell

An increase of die swell ratio reflects an increase in molecular weight and broadened molecular weight distribution as seen in inventive examples.

• Increase of Melt Strength

Increase of the melt strength of the polyethylene compositions including the rheology modifier is observed when compared to the comparative examples, indicating an increase in molecular weight.

• Increase of eta$_{747}$

Eta$_{747}$ provides an indication of resistance to sagging exhibited by polymer melt during processing and it is known to be a function of molecular weight. The rheology modifier causes/enables chain extensions/partial cross-linking/branching with the polymer backbone resulting in higher number of chain entanglements/network formation. This increase in eta$_{747}$ is expected to improve the sagging resistance of polyethylene compositions including the rheology modifier, as shown in Figure 1 for PE1-PE5 sets.

• Negligible impact on thermal and mechanical properties,.

j) Activation of the rheology modifier during the compounding step

The polyethylene resins in powder form reactor is mixed with antioxidant additive and filler like carbon black during the compounding step to impart necessary functionality in the polymer and final polyethylene composition is in pellet form. Using the rheology modifier with the polyethylene resins along with antioxidant additives during the compounding step, it is noted that certain specific energy need to be imparted to the polyethylene resin to activate the rheology modifier. This shear induced compounding process in a twin screw compounding machine with temperature and concentration control is found to activate rheology modifier to impart improvement in rheological properties of polyolefin. The shear energy imparted in the polymer is measured as the specific energy (kWh/kg) requirement in the compounding process is a function of polymer enthalpy, rate of processing, suction pressure of melt pump, rpm of screw, melt viscosity of polymer.

Therefore from the experiments it is concluded that, shear induced minimum specific energy need to be imparted to the polymer in order to activate the rheology modifier irrespective of the temperature, concentration and residence time used during the mixing/compounding process.

**Claims**

1.   A reactive polyolefin composition comprising

(A) a polyolefin resin;
(B) a rheology modifier, which is free of a peroxide initiator,

wherein the polyolefin resin (A) and the rheology modifier (B) are reactive to form a thermoplastic polyolefin composition at a temperature in the range of from 180°C to 300°C and a specific energy equal to or greater than 0.15 kWh/kg,
wherein the rheology modifier (B) is present in the reactive polyolefin composition in an amount in the range of > 150 to 750 ppm, based on the total amount of the reactive polyolefin composition.

2.   The reactive polyolefin composition according to claim 1, wherein the rheology modifier (B) is hexamethylene-1,6-dimaleimide.

3.   The reactive polyolefin composition according to claims 1 or 2, wherein the rheology modifier (B) is present in the reactive polyolefin composition in an amount in the range of > 150 to < 750 ppm, further preferred 200 to 700 ppm, based on the total amount of the reactive polyolefin composition.

4.   The reactive polyolefin composition according to any one of the preceding claims,
wherein the polyolefin resin (A) is selected from a polyethylene resin, a polypropylene resin or blended mixtures thereof.

5.   The reactive polyolefin composition according to any one of the preceding claims,
wherein the polyolefin resin (A) is unimodal, bimodal or multimodal and/or wherein the polyolefin resin (A) is a polyethylene resin selected from linear low density polyethylene (LLDPE) resin, medium density polyethylene (MDPE) resin or high density polyethylene (HDPE) resin.

6.   The reactive polyolefin composition according to any one of the preceding claims,
wherein the reactive polyolefin composition is free of peroxide radical initiation agents or any other coagents.

7.   A process for preparing a thermoplastic polyolefin composition comprising

a) providing a reactive polyolefin composition according to any one of the preceding claims;
b) heating the reactive polyolefin composition to a temperature of 180°C to 300°C; and
c) subjecting the reactive polyolefin composition to a specific energy of equal to or more than 0.15 kWh/kg to obtain the thermoplastic polyolefin composition, wherein process steps (b) and (c) are carried out simultaneously in an extruder and the extruder is operated at a mixer speed in the range of from 200 to 750 rpm.

8.   The process according to claim 7, wherein process steps (b) and (c) are carried out simultaneously in an extruder selected from a single-screw extruder and a twinscrew extruder.

9.   The process according to claim 8, wherein the extruder is operated at a mixer speed in the range of from 300 to 500 rpm.

10.  The process according to any one of claims 7 to 9, wherein the specific energy is provided by shearing force.

11. The process according to any one of claims 7 to 10, wherein the thermoplastic polyolefin composition has a viscosity at a constant shear stress of 747 Pa, $eta_{747}$ (Comp), which is at least 10 % higher, preferably at least 20% higher, more preferably at least 30% higher and most preferably at least 50% higher than the viscosity at a constant shear stress of 747 Pa of the polyolefin composition based on polyolefin resin (A) without the rheology modifier (B), $eta_{747}$ (A).

12. The process according to any one of claims 7 to 11, wherein the thermoplastic polyolefin composition has:

a) a complex viscosity at a shear rate of 0.05 rad/s, $eta_{0.05}$ (Comp), which is at least 5 % higher than the complex viscosity at a shear rate of 0.05 rad/s of the polyolefin composition based on polyolefin resin (A) without the rheology modifier (B), $eta_{0.05}$ (A), and/or
b) a melt flow rate $MFR_5$ (Comp), which is not more than 90% of the melt flow rate of the polyolefin composition based on polyolefin resin (A) without the rheology modifier (B), $MFR_5$ (A), and/or
c) a flow rate ratio $FRR_{21/5}$ (Comp), which is at least 1.0% higher than the flow rate ratio of the polyolefin composition based on polyolefin resin (A) without the rheology modifier (B), $FRR_{21/5}$ (A), and/or
d) a flow rate ratio $FRR_{21/5}$ (Comp), which is between 5 and 55.

13. A thermoplastic polyolefin composition obtainable by the process according to any one of claims 7 to 12.

14. An article comprising the thermoplastic polyolefin composition according to claim 13 or obtainable by the process according to any one of claims 7 to 12, which is preferably selected from a pipe, film or blow moulded or any other extruded article.

15. The use of a rheology modifier (B), which is free of a peroxide initiator, in a reactive polyolefin composition comprising a polyolefin resin (A) and the rheology modifier (B), which is free of a peroxide initiator, according to any one of claims 1 to 6, for increasing the viscosity at a constant shear stress of 747 Pa of the final thermoplastic polyolefin composition, $eta_{747}$ (Comp), reducing the melt flow rate of the final thermoplastic polyolefin composition, $MFR_5$ (Comp), by reacting the polyolefin resin (A) and the rheology modifier (B) at a temperature in the range of from 180°C to 300°C and a specific energy equal to or greater than 0.15 kWh/kg in a compounder.

**Patentansprüche**

1. Reaktive Polyolefin-Zusammensetzung, umfassend

(A) ein Polyolefinharz;
(B) einen Rheologiemodifikator, der frei von einem Peroxidinitiator ist,

wobei das Polyolefinharz (A) und der Rheologiemodifikator (B) reaktiv sind, um eine thermoplastische Polyolefin-Zusammensetzung bei einer Temperatur im Bereich von 180°C bis 300°C und einer spezifischen Energie gleich oder größer als 0,15 kWh/kg zu bilden,
wobei der Rheologiemodifikator (B) in der reaktiven Polyolefin-Zusammensetzung in einer Menge im Bereich von > 150 bis 750 ppm, bezogen auf die Gesamtmenge der reaktiven Polyolefin-Zusammensetzung, vorhanden ist.

2. Reaktive Polyolefin-Zusammensetzung nach Anspruch 1, wobei der Rheologiemodifikator (B) Hexamethylen-1,6-dimaleimid ist.

3. Reaktive Polyolefin-Zusammensetzung nach Anspruch 1 oder 2, wobei der Rheologiemodifikator (B) in der reaktiven Polyolefin-Zusammensetzung in einer Menge im Bereich von > 150 bis < 750 ppm, weiter bevorzugt 200 bis 700 ppm, bezogen auf die Gesamtmenge der reaktiven Polyolefin-Zusammensetzung, vorhanden ist.

4. Reaktive Polyolefin-Zusammensetzung nach einem der vorhergehenden Ansprüche, wobei das Polyolefinharz (A) aus einem Polyethylenharz, einem Polypropylenharz oder Mischungen davon ausgewählt ist.

5. Reaktive Polyolefin-Zusammensetzung nach einem der vorhergehenden Ansprüche, wobei das Polyolefinharz (A) unimodal, bimodal oder multimodal ist und/oder wobei das Polyolefinharz (A) ein Polyethylenharz ist, ausgewählt aus linearem Polyethylen niedriger Dichte (LLDPE), Polyethylen mittlerer Dichte (MDPE) oder Polyethylen hoher Dichte (HDPE).

6. Reaktive Polyolefin-Zusammensetzung nach einem der vorhergehenden Ansprüche, wobei die reaktive Polyolefin-Zusammensetzung frei von Peroxidradikal-Initiierungsmitteln oder anderen Koagenzien ist.

7. Verfahren zur Herstellung einer thermoplastischen Polyolefin-Zusammensetzung, umfassend

   a) Bereitstellen einer reaktiven Polyolefin-Zusammensetzung nach einem der vorhergehenden Ansprüche;
   b) Erhitzen der reaktiven Polyolefin-Zusammensetzung auf eine Temperatur von 180°C bis 300°C; und
   c) Unterwerfen der reaktiven Polyolefin-Zusammensetzung einer spezifischen Energie von gleich oder mehr als 0,15 kWh/kg, um die thermoplastische Polyolefin-Zusammensetzung zu erhalten, wobei die Verfahrensschritte (b) und (c) gleichzeitig in einem Extruder durchgeführt werden und der Extruder mit einer Mischergeschwindigkeit im Bereich von 200 bis 750 U/min betrieben wird.

8. Verfahren nach Anspruch 7, wobei die Verfahrensschritte (b) und (c) gleichzeitig in einem Extruder durchgeführt werden, der aus einem Einschneckenextruder und einem Doppelschneckenextruder ausgewählt ist.

9. Verfahren nach Anspruch 8, wobei der Extruder mit einer Mischergeschwindigkeit im Bereich von 300 bis 500 U/min betrieben wird.

10. Verfahren nach einem der Ansprüche 7 bis 9, wobei die spezifische Energie durch Scherkraft bereitgestellt wird.

11. Verfahren nach einem der Ansprüche 7 bis 10, wobei die thermoplastische Polyolefin-Zusammensetzung eine Viskosität bei einer konstanten Scherbeanspruchung von 747 Pa, $eta_{747}$ (Comp), aufweist, die mindestens 10 % höher, vorzugsweise mindestens 20 % höher, noch bevorzugter mindestens 30 % höher und am meisten bevorzugt mindestens 50 % höher ist als die Viskosität bei einer konstanten Scherbeanspruchung von 747 Pa der Polyolefin-Zusammensetzung auf Basis von Polyolefinharz (A) ohne den Rheologiemodifikator (B), $eta_{747}$ (A).

12. Verfahren nach einem der Ansprüche 7 bis 11, wobei die thermoplastische Polyolefin-Zusammensetzung aufweist:

   a) eine komplexe Viskosität bei einer Scherrate von 0,05 rad/s, $eta_{0,05}$ (Comp), die mindestens 5 % höher ist als die komplexe Viskosität bei einer Scherrate von 0,05 rad/s der Polyolefin-Zusammensetzung auf Basis von Polyolefinharz (A) ohne den Rheologiemodifikator (B), $eta_{0,05}$ (A), und/oder
   b) eine Schmelzflussrate $MFR_5$ (Comp), die nicht mehr als 90 % der Schmelzflussrate der Polyolefin-Zusammensetzung auf der Basis von Polyolefinharz (A) ohne den Rheologiemodifikator (B) beträgt, $MFR_5$ (A), und/oder
   c) ein Fließratenverhältnis $FRR_{21/5}$ (Comp), das mindestens 1,0 % höher ist als das Fließratenverhältnis der Polyolefin-Zusammensetzung auf Basis von Polyolefinharz (A) ohne den Rheologiemodifikator (B), $FRR_{21/5}$ (A), und/oder
   d) ein Durchflussmengenverhältnis $FRR_{21/5}$ (Comp), das zwischen 5 und 55 liegt.

13. Thermoplastische Polyolefin-Zusammensetzung, erhältlich nach dem Verfahren gemäß einem der Ansprüche 7 bis 12.

14. Gegenstand, der die thermoplastische Polyolefin-Zusammensetzung nach Anspruch 13 enthält oder durch das Verfahren nach einem der Ansprüche 7 bis 12 erhältlich ist, der vorzugsweise aus einem Rohr, einer Folie oder einem blasgeformten oder einem anderen extrudierten Gegenstand ausgewählt ist.

15. Verwendung eines Rheologiemodifikators (B), der frei von einem Peroxidinitiator ist, in einer reaktiven Polyolefin-Zusammensetzung, die ein Polyolefinharz (A) und den Rheologiemodifikator (B), der frei von einem Peroxidinitiator ist, nach einem der Ansprüche 1 bis 6 umfasst, um die Viskosität bei einer konstanten Scherspannung von 747 Pa der endgültigen thermoplastischen Polyolefin-Zusammensetzung zu erhöhen, $eta_{747}$ (Comp), Verringerung der Schmelzflußrate der endgültigen thermoplastischen Polyolefin-Zusammensetzung, $MFR_5$ (Comp), durch Umsetzung des Polyolefinharzes (A) und des Rheologiemodifikators (B) bei einer Temperatur im Bereich von 180°C bis 300°C und einer spezifischen Energie gleich oder größer als 0.15 kWh/kg in einem Compounder.

**Revendications**

1. Composition de polyoléfine réactive comprenant

(A) une résine de polyoléfine ;

(B) un modificateur de rhéologie, qui est exempt d'un amorceur peroxyde

dans laquelle la résine de polyoléfine (A) et le modificateur de rhéologie (B) sont réactifs pour former une composition de polyoléfine thermoplastique à une température dans la plage allant de 180°C à 300°C et une énergie spécifique supérieure ou égale à 0,15 kWh/kg,

dans laquelle le modificateur de rhéologie (B) est présent dans la composition de polyoléfine réactive en une quantité dans la plage de >150 à 750 ppm, sur la base de la quantité totale de la composition de polyoléfine réactive.

2. Composition de polyoléfine réactive selon la revendication 1, dans laquelle le modificateur de rhéologie (B) est l'hexaméthylène-1,6-dimaléimide.

3. Composition de polyoléfine réactive selon les revendications 1 ou 2, dans laquelle le modificateur de rhéologie (B) est présent dans la composition de polyoléfine réactive en une quantité dans la plage de >150 à <750 ppm, plus préférentiellement 200 à 700 ppm, sur la base de la quantité totale de la composition de polyoléfine réactive.

4. Composition de polyoléfine réactive selon l'une des revendications précédentes, dans laquelle la résine de polyoléfine (A) est sélectionnée parmi une résine de polyéthylène, une résine de polypropylène ou des combinaisons mélangées de celles-ci.

5. Composition de polyoléfine réactive selon l'une des revendications précédentes, dans laquelle la résine de polyoléfine (A) est unimodale, bimodale ou multimodale et/ou dans laquelle la résine de polyoléfine (A) est une résine de polyéthylène sélectionnée parmi une résine de polyéthylène basse densité linéaire (LLDPE), une résine de polyéthylène moyenne densité (MDPE) ou une résine de polyéthylène haute densité (HDPE).

6. Composition de polyoléfine réactive selon l'une des revendications précédentes, dans laquelle la composition de polyoléfine réactive est exempte d'agent amorceur radicalaire peroxyde ou de tout autre coagent.

7. Procédé de préparation d'une composition de polyoléfine thermoplastique comprenant

a) la fourniture d'une composition de polyoléfine réactive selon l'une des revendications précédentes ;

b) le chauffage de la composition de polyoléfine réactive à une température de 180°C à 300°C ; et

c) la soumission de la composition de polyoléfine réactive à une énergie spécifique supérieure ou égale à 0,15 kWh/kg pour obtenir la composition de polyoléfine thermoplastique, dans lequel les étapes de procédé (b) et (c) sont mises en œuvre simultanément dans une extrudeuse et l'extrudeuse fonctionne à une vitesse de mélangeur dans la plage allant de 200 à 750 tr/minute.

8. Procédé selon la revendication 7, dans lequel les étapes de procédé (b) et (c) sont mises en œuvre simultanément dans une extrudeuse sélectionnée parmi une extrudeuse monovis et une extrudeuse double vis.

9. Procédé selon la revendication 8, dans lequel l'extrudeuse fonctionne à une vitesse de mélangeur dans la plage allant de 300 à 500 tr/minute.

10. Procédé selon l'une des revendications 7 à 9, dans lequel l'énergie spécifique est produite par une force de cisaillement.

11. Procédé selon l'une des revendications 7 à 10, dans lequel la composition de polyoléfine thermoplastique présente une viscosité à une contrainte de cisaillement constante de 747 Pa, $eta_{747}$ (Comp), qui est au moins 10 % supérieure, de préférence au moins 20 % supérieure, plus préférentiellement au moins 30 % supérieure et le plus préférentiellement au moins 50 % supérieure à la viscosité à une contrainte de cisaillement constante de 747 Pa de la composition de polyoléfine sur la base d'une résine de polyoléfine (A) sans le modificateur de rhéologie (B), $eta_{747}$ (A).

12. Procédé selon l'une des revendications 7 à 11, dans lequel la composition de polyoléfine thermoplastique présente :

a) une viscosité complexe à une vitesse de cisaillement de 0,05 rad/s, $eta_{0,05}$(Comp), qui est au moins 5 % supérieure à la viscosité complexe à une vitesse de cisaillement de 0,05 radis de la composition de polyoléfine sur la base d'une résine de polyoléfine (A) sans le modificateur de rhéologie (B), $eta_{0,05}$(A), et/ou

b) un indice de fluidité à chaud $MFR_5$ (Comp), qui est inférieur ou égal à 90 % de l'indice de fluidité à chaud de la composition de polyoléfine sur la base d'une résine de polyoléfine (A) sans le modificateur de rhéologie (B), $MFR_5$ (A), et/ou

c) un rapport de débit $FRR_{21/5}$ (Comp), qui est au moins 1,0 % supérieur au rapport de débit de la composition de polyoléfine sur la base d'une résine de polyoléfine (A) sans le modificateur de rhéologie (B), $FRR_{21/5}$ (A), et/ou

d) un rapport de débit $FRR_{21/5}$ (Comp), qui est compris entre 5 et 55.

13. Composition de polyoléfine thermoplastique pouvant être obtenue par le procédé selon l'une des revendications 7 à 12.

14. Article comprenant la composition de polyoléfine thermoplastique selon la revendication 13 ou pouvant être obtenu par le procédé selon l'une des revendications 7 à 12, qui est de préférence sélectionné parmi un tuyau, un film ou moulé par soufflage ou n'importe quel autre article extrudé.

15. Utilisation d'un modificateur de rhéologie (B), qui est exempt d'un amorceur peroxyde, dans une composition de polyoléfine réactive comprenant une résine de polyoléfine (A) et le modificateur de rhéologie (B), qui est exempt d'un amorceur peroxyde, selon l'une des revendications 1 à 6, pour augmenter la viscosité à une contrainte de cisaillement constante de 747 Pa de la composition de polyoléfine thermoplastique finale, $eta_{747}$ (Comp), réduire l'indice de fluidité à chaud de la composition de polyoléfine thermoplastique finale, $MFR_5$(Comp), par réaction de la résine de polyoléfine (A) et du modificateur de rhéologie (B) à une température dans la plage allant de 180°C à 300°C, et une énergie spécifique supérieure ou égale à 0,15 kWh/kg dans un mélangeur.

Fig 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3109275 A1
- EP 0739937 A
- WO 02102891 A
- WO 2004055068 A
- WO 2004055069 A
- EP 0810235 A
- WO 9951646 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- EP 2610271 A
- WO 2012007430 A
- WO 9219659 A
- WO 9219653 A
- WO 9219658 A
- US 4382019 A
- US 4435550 A
- US 4465782 A
- US 4473660 A
- US 4560671 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- EP 2228394 A1

### Non-patent literature cited in the description

- **HEINO, E.L.** ; **LEHTINEN, A.** ; **TANNER J.** ; **SEPPÄLÄ, J.** *Neste Oy, Porvoo, Finland, Theor. Appl. Rheol., Proc. Int. Congr. Rheol, 11th*, 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society*, 1995
- Definition of terms relating to the non-ultimate mechanical properties of polymers. *Pure & Appl. Chem.*, 1998, vol. 70 (3), 701-754
- Encyclopedia of Polymer Science and Engineering, vol. 14, 492-509
- **M. H. WAGNER**. Rheotens-Mastercurves and Drawability of Polymer Melts. *Polymer Engineering and Science*, vol. 36, 925-935